(19) **Europäisches Patentamt**
**European Patent Office**
**Office européen des brevets**

(11) **EP 2 072 284 B1**

(12) **EUROPEAN PATENT SPECIFICATION**

(45) Date of publication and mention
of the grant of the patent:
**20.07.2011 Bulletin 2011/29**

(51) Int Cl.:
***C08L 23/28*** (2006.01)

(21) Application number: **08171150.9**

(22) Date of filing: **10.12.2008**

(54) **Tire with innerliner containing low structure silica**

Reifen mit Innenauskleidung aus Niederstruktursilica

Pneu avec garniture contenant une silice à faible structure

(84) Designated Contracting States:
**DE FR IT**

(30) Priority: **21.12.2007 US 962160**

(43) Date of publication of application:
**24.06.2009 Bulletin 2009/26**

(73) Proprietor: **The Goodyear Tire & Rubber Company**
**Akron, OH 44316-0001 (US)**

(72) Inventors:
• **Thielen, Georges Marcel Victor**
**L-4995, Schouweiler (LU)**
• **Burkholder, Karen Elaine**
**44281, OH Wadsworth (US)**

(74) Representative: **Kutsch, Bernd**
**Goodyear S.A.**
**Patent Department**
**L-7750 Colmar-Berg (LU)**

(56) References cited:
**EP-A1- 1 752 491     EP-A1- 1 783 164**
**JP-A- 2006 241 297     US-A1- 2002 025 287**

• **ANONYMOUS: "SIDISTAR for polymers"**
**SIDISTAR, [Online] 22 November 2007**
**(2007-11-22), XP002526416 Retrieved from the**
**Internet: URL:http://www.sidistar.com/eway/**
**default.a spx?pid=244&trg=Main_7208&Main_**
**7208=7210:0 :4,4268:1:0:0:::0:0> [retrieved on**
**2009-05-04]**

**Description**

Background of the Invention

A pneumatic rubber tire is conventionally of a toroidal shape and comprises a carcass with a cavity in which its closure is typically completed with a rigid rim onto which the tire is to be mounted.

The inner surface of a pneumatic tire, namely a surface of said cavity which is sometimes referred to as an "innerliner" is typically a rubber layer composed of an elastomeric composition designed to prevent, or retard, the permeation of air and moisture into the tire carcass from the aforesaid cavity which becomes the tire's inner air chamber.

Butyl rubber is typically relatively impermeable to air and moisture and is often used as a major portion of the tire innerliner composition and can be in a form of butyl rubber or halobutyl rubber such as, for example, bromobutyl rubber. For example, see US-A- 3,808,177. Butyl rubber is an isobutylene copolymer with a small amount of isoprene which typically contains only from 0.5 to 5 weight percent units derived from isoprene.

Halobutyl and butyl rubbers are usually one of the most expensive elastomers used in a tire. Given the competitive tire market and the continued need to lower the cost of manufacturing tires, there exists a desire to decrease the cost of innerliners while maintaining their performance.

JP-A- 2006-241297 describes a tread rubber composition for a heavy load tire, the rubber composition comprising an elastomer, carbon black and silica.

Summary of the Invention

The present invention is directed to a pneumatic tire according to claim 1.

Dependent claims refer to preferred embodiments of the invention.

Description of the Invention

It has been found unexpectedly that an inclusion in the tire innerliner rubber composition of a low structure microsilica results in an innerliner having high resistance to permeability with acceptable tear strength.

In the description of the invention, the term "phr" relates to parts by weight of a particular ingredient per 100 parts by weight of rubber contained in a rubber composition. The terms "rubber" and "elastomer" are used interchangeably unless otherwise indicated, the terms "cure" and "vulcanize" may be used interchangeably unless otherwise indicated and the terms "rubber composition" and "rubber compound" may be used interchangeably unless otherwise indicated. The term "butyl type rubber" is used herein to refer to butyl rubber (copolymer of isobutylene with a minor amount comprises, for example 0.5 to 5 weight percent, alternatively from 1 to 3 percent, of units derived from isoprene), and halobutyl rubber as chlorobutyl rubber and bromobutyl rubber (chlorinated and brominated butyl rubber, respectively) unless otherwise indicated.

The rubber composition for use in the innerliner of the present invention include an elastomer. Suitable elastomers include butyl type rubber, including butyl rubber and halobutyl rubbers such as chlorobutyl rubber and bromobutyl rubber. Other suitable elastomers include synthetic polyisoprene, natural rubber, styrene butadiene rubber, and polybutadiene.

An alternative butyl rubber for the innerliner comprises a brominated copolymer of isobutylene and paramethylstyrene. The brominated copolymer conventionally contains from 0.3 to 2 weight percent bromination. Exemplary of such a brominated copolymer is Exxpro® from ExxonMobil Chemical reportedly having a Mooney (ML 1 +8) viscosity at 125°C of from 45 to 55, a paramethylstyrene content of 5 weight percent, isobutylene content of 94 to 95 weight percent, and a bromine content of 0.8 weight percent. Alternately, the butyl rubber may comprising a combination of a copolymer of isobutylene and isoprene together with a brominated copolymer of isobutylene and paramethylstyrene.

The rubber composition for use in the innerliner preferably includes a low structure microsilica. By low structure, it is meant that the microsilica has a relatively low specific surface area and is of a mostly spherical primary particle geometry with a low aggregation tendency; in one embodiment the specific surface area ranges from 2.1-2.3 $g/cm^3$. The term microsilica as used herein preferably refers to particulate amorphous $SiO_2$ obtained from a gas phase process in which silica is reduced and the reduction product is oxidized in vapor phase to form amorphous silica. Such microsilica may contain at least 97% by weight silica ($SiO_2$) and have a specific density of 2.1-2.3 $g/cm^3$ and a surface area at 15-25 $m^2/g$. The primary particles are substantially spherical. The primary particles preferably have a median size of 0.15 microns, with a range of median size of 100 to 200 nm. Such microsilica is preferably obtained as a co-product in the production of silicon or silicon alloys in electric reduction furnaces. In these processes large quantities of silica are formed as $SiO_2$. The $SiO_2$ is recovered in conventional manner using filter or other collection apparatus.

Microsilica may be produced as a by-product during production of ferrosilicon and silicon in electric reduction furnaces where a charge comprising a $SiO_2$ source and one or more solid carbonaceous reduction agents is reacted to form ferrosilicon or silicon. In this process, gaseous SiO is formed as an intermediate product in the reaction zone in the furnace and the gas moves upwards through the charge. A part of the SiO gas is condensed in the cooler charge above the reaction zone, while the remaining part of the SiO gas escapes from the charge, is quickly cooled and oxidized by air which is supplied to the furnace, above the charge, and forms particulate amorphous $SiO_2$. The particulate $SiO_2$ is carried upward out of the furnace in the off-gas and is recovered from the furnace off-gas in filters, normally baghouse filters. Microsilica produced in this way has a particle size less than 0.5 microns (500 nm), substantially between 0.02 and 0.5 microns, and the individual particles are basically of spherical shape. Suitable low structure microsilica may be produced, for example, following methods as disclosed in US-A- 6,696,035.

Suitable low structure microsilica is available commercially as the Sidistar® series from Elkem including Sidistar® R. Sidistar® R is reported to have properties as follows: silicon dioxide (amorphous $SiO_2$), minimum 90.0 percent by weight; carbon (C), maximum 1.50 percent by weight; iron oxide ($Fe_2O_3$), maximum 0.25 percent by weight; copper (Cu), maximum 0.01 percent by weight; manganese (Mn), maximum 0.02 percent by weight; water ($H_2O$ when packed) maximum 0.80 percent by weight; loss on ignition at 975°C, 1.80%; BET surface area 15-25 $m^2/g$; median particle size 0.15 microns; coarse particles (>45 microns), maximum 0.10 percent by weight; pH-value (fresh), 6.5-8.0; specific gravity 2.2 $g/cm^3$; and bulk density (when packed), 500-700 $kg/m^3$.

In one embodiment, the low structure microsilica has a bimodal particle size distribution with a narrow maximum at 20 nm and a second, broader maximum at 100 nm to 400 nm.

In one embodiment, individual particles of the low structure silica are substantially spherical in shape.

By substantially spherical, it is meant that the low structure silica particles have a surface area-based sphericity of greater than 0.95, ranging from 0.95 to 1, according to the following definition (following US-A- 5,915,150):

$$\text{sphericity} = [\text{geometrical specific surface area } (m^2/g) \text{ based on an assumption that the substantially spherical particles are in the form of true spheres}]/[\text{actually measured BET specific surface area } (m^2/g) \text{ of the substantially spherical fine particles}].$$

The values of BET specific surface area ($m^2/g$) of the substantially spherical particles for calculation of sphericity referred to herein are based on measurement by using a specific surface area meter (for example, "Autosorb 1", available from QUANTACHROME Co.) performed in the following manner.

About 0.3 g of substantially spherical particles are weighed into a cell, subjected to evacuation at a temperature of 40°C and a vacuum of 1.0 x $10^{-3}$ mm Hg for at least 1 hour, and then subjected to nitrogen adsorption, while being cooled at liquid nitrogen temperature, for specific surface area determination according to the BET multi-point method.

The geometrical specific surface area ($m^2/g$) on an assumption that the substantially spherical particles are in the form of true spheres, may be measured in the following manner. Sample substantially spherical particles are photographed at a magnification of 10,000 through an electron microscope, and images of 100 particles each having a particle size of at least 10 nm are selected at random to obtain an average of the longer-axis diameters of the 100 particles. Then, a substantially spherical fine particle is assumed to be a true sphere having a radius r (= ½ x the average longer-axis diameter) so that its surface area is calculated as $4\pi r^2$ ($m^2$) and its volume is calculated as $^4/_3\pi r^3$ ($m^3$). Then, by using a density $d_b$ ($g/m^3$) of the substantially spherical particles separately measured, the assumed geometrical specific surface area can be calculated as $4\pi r^2 /( ^4/_3\pi r^3 d_b)=3/(rd_b)$.

In one embodiment, the amount of low structure silica may be present in the rubber composition in an amount ranging from 10 to 70 phr. In another embodiment, the amount of low structure silica may be present in the rubber composition in an amount ranging from 10 to 40 phr.

In addition to the aforesaid elastomers and low structure microsilica, for the tire innerliner, the innerliner rubber composition may also contain other conventional ingredients commonly used in rubber vulcanizates, for example, tackifier resins, processing aids, carbon black, silica, talc, clay, mica, antioxidants, antiozonants, stearic acid, activators, waxes and oils as may be desired. Carbon black may be used in a range, for example, of from 10 to 80 phr. In one embodiment, the total amount of low structure silica and carbon black in the composition ranges from 10 to 30 percent by volume.

The vulcanization of the compound for use as an innerliner is conducted in the presence of a sulfur vulcanizing agent. Examples of suitable sulfur vulcanizing agents include elemental sulfur (free sulfur) or sulfur donating vulcanizing agents, for example, an amine disulfide, polymeric disulfide or sulfur olefin adducts. Preferably, the sulfur vulcanizing agent is elemental sulfur. As known to those skilled in the art, sulfur vulcanizing agents are used in an amount ranging from 0.2 to 5.0 phr with a range of from 0.5 to 3.0 being preferred.

Accelerators are used to control the time and/or temperature required for vulcanization and to improve the properties of the vulcanizate. A single accelerator system may be used, i.e., primary accelerator in conventional amounts ranging from 0.5 to 3.0 phr. In the alternative, combinations of two or more accelerators may be used which may consist of a primary accelerator which is generally used in the larger amount (0.3 to 3.0 phr), and a secondary accelerator which is generally used in smaller amounts (0.05 to 1.0 phr) in order to activate and to improve the properties of the vulcanizate. In addition, delayed action accelerators may be used which are not effected by normal processing temperatures but produce satisfactory cures at ordinary vulcanization temperatures. Suitable types of accelerators that may be used are amines, disulfides, guanidines, thioureas, thiazoles, thiurams, sulfenamides, dithiocarbamate and xanthates. Preferably, the primary accelerator is a disulfide or sulfenamide.

Various synthetic, amorphous silicas may be used for the tire innerliner composition, where it is desired that the innerliner composition contains a silica in addition to the low structure microsilica. Representative of such silicas are, for example, precipitated silicas as, for example, HiSil 210™ and HiSil 243™ from PPG Industries, as well as various precipitated silicas from J.M. Huber Company, various precipitated silicas from Degussa Company and various precipitated silicas from Rhodia Company.

Various coupling agents may be used for the various synthetic, amorphous silicas, particularly the precipitated silicas, to couple the silica aggregates to various of the elastomers. Representative of such coupling agents are, for example and not intended to be limiting, bis(3-trialkoxysilylpropyl) polysulfides wherein at least two, and optionally all three, of its alkoxy groups are ethoxy groups and its polysulfidic bridge comprises an average of from 2 to 4, alternatively from 2 to 2.6 or an average of from 3.4 to 3.8 connecting sulfur atoms, and an alkoxyorganomercaptosilane which may optionally have its mercpto moiety blocked with a suitable blocking agent during the mixing thereof with the rubber composition, wherein said alkoxy group is preferably an ethoxy group.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s).

In practice the innerliner rubber composition, or compound, is formed into a gum strip. As known to those skilled in the art, a gum strip is produced by a press or passing a rubber compound through a mill, calender, multi-head extruder or other suitable means. Preferably, the gum strip is produced by a calender because greater uniformity is believed to be provided. The uncured gum strip is then constructed as an inner surface (exposed inside surface) of an uncured rubber tire structure, also known as the carcass. The innerliner is then sulfur co-cured with the tire carcass during the tire curing operation under conditions of heat and pressure.

Vulcanization of the tire of the present invention is generally carried out, for example, at temperatures of between 100°C and 200°C. Preferably, the vulcanization is conducted at temperatures ranging from 110°C to 180°C. Any of the usual vulcanization processes may be used such as heating in a press or mold, heating with superheated steam or hot salt or in a salt bath. Preferably, the heating is accomplished in a press or mold in a method known to those skilled in the art of tire curing.

As a result of this vulcanization, the innerliner becomes an integral part of the tire by being co-cured therewith.

Therefore, in practice, the innerliner may, for example, be first constructed as an inner surface of an uncured rubber tire as an uncured compounded rubber gum strip and is then co-cured with the tire during a tire curing operation wherein the said rubber gum strip may have, for example, a thickness in the range of 0.04 to 1, alternately in a range of from 0.05 to 0.5, centimeters, depending somewhat the type, size and intended use of the tire.

The pneumatic tire with the integral innerliner may be constructed in the form of a passenger tire, truck tire, or other type of bias or radial pneumatic tire.

The following examples are presented in order to illustrate the present invention. The parts and percentages are by weight unless otherwise noted.


Example 1


In this example, the effect of dispersing a microsilica in a bromobutyl rubber innerliner composition is illustrated. All amounts are in parts by weight. The rubber compositions were mixed using a two phase mixing procedure, with addition of the elastomers and fillers in a first, non-productive mix step, followed by addition of conventional amounts of curatives in a second, productive mix step, to obtain a rubber compound.

The mixed compound was formed into test specimens and cured at 170°C for 25 minutes. Cured samples were then tested for air permeability. Air permeabilities are shown in Tables 1-3 for various filler volumes.

Adhesion test samples were prepared by a standard peel adhesion test on 1" wide specimens. Strip adhesion samples were made by preparation of a sandwich of two layers of the compound separated by a mylar window sheet. The sandwich was cured and 1" samples cut centered on each window in the mylar. The cured samples were then tested for adhesion between the sheets in the area defined by the mylar window by 180 degree pull on a test apparatus.

Cured samples were then tested for adhesion at the indicated test conditions. Results of the adhesion tests are shown in Tables 1-3 for various filler volumes.

**Table 1**

| Volume % Filler | 18 | 18 | 18 | 18 |
|---|---|---|---|---|
| Carbon Black, phr | 0 | 25 | 38 | 50 |
| Microsilica, phr | 56 | 8 | 14 | 0 |
| **Tensile Properties Cure: 25 min @ 170°C; Test: @ 23°C** | | | | |
| Elongation, % | 1178 | 1076 | 1004 | 935 |
| Mod 100%, MPa | 0.4 | 0.6 | 0.7 | 0.8 |
| Mod 300%, MPa | 0.7 | 1.3 | 1.8 | 2.5 |
| Tensile Strength, MPa | 7.9 | 8.8 | 8.7 | 9 |
| Shore A | 30.5 | 36.4 | 41.1 | 44.4 |
| Rebound | 12.2 | 11.6 | 11.3 | 11.4 |
| **Tear Strength Cure: 25 min @ 170°C; Test: @ 100°C** | | | | |
| Tear Strength, N | 13.6 | 18.2 | 21.4 | 14.9 |
| Normalized Tear | 0.91 | 1.22 | 1.44 | 1 |
| **Air Diffusion Cure: 25 min @ 170°C; Test: @ 90°C. Gas =Air @ 6 MPa** | | | | |
| Diffusion, cm$^3$/min x 10$^8$ | 6.46 | 6.38 | 4.66 | 7.27 |
| Normalized Diffusion | 1.12 | 1.14 | 1.56 | 1.00 |

**Table 2**

| Volume % Filler | 25 | 25 | 25 | 25 |
|---|---|---|---|---|
| Carbon Black, phr | 25 | 38 | 50 | 75.5 |
| Microsilica, phr | 56 | 42 | 28 | 0 |
| **Tensile Properties Cure: 25 min @ 170°C; Test: @ 23°C** | | | | |
| Elongation, % | 1031 | 947 | 818 | 690 |
| Mod 100%, MPa | 0.6 | 0.7 | 0.9 | 1.4 |
| Mod 300%, MPa | 1.4 | 2 | 3.1 | 4.9 |
| Tensile Strength, MPa | 7.6 | 7.7 | 8.2 | 8.6 |
| Shore A | 41.9 | 43.7 | 48.1 | 55.6 |
| Rebound | 10.2 | 9.9 | 10 | 10.2 |
| **Tear Strength Cure: 25 min @ 170°C; Test: @ 100°C** | | | | |
| Tear Strength, N | 20.2 | 24.1 | 19.2 | 18.1 |
| Normalized Tear | 1.12 | 1.33 | 1.06 | 1 |
| **Air Diffusion Cure: 25 min @ 170°C; Test: @ 90°C, Gas =Air @ 6 MPa** | | | | |
| Diffusion, cm$^3$/min x 10$^8$ | 5.35 | 6.09 | 5.34 | 5.89 |
| Normalized Diffusion | 1.10 | 0.97 | 1.10 | 1 |

**Table 3**

| | | | | |
|---|---|---|---|---|
| Volume % Filler | 28 | 28 | 28 | 28 |
| Carbon Black, phr | 0 | 38 | 50 | 88 |
| Microsilica, phr | 98 | 56 | 42 | 0 |
| **Tensile Properties Cure: 25 min @ 170°C; Test: @ 23°C** | | | | |
| Elongation, % | 1109 | 921 | 859 | 573 |
| Mod 100%, MPa | 0.5 | 0.8 | 0.9 | 1.8 |
| Mod 300%, MPa | 0.9 | 2.1 | 2.8 | 6.1 |
| Tensile Strength, MPa | 7.2 | 7.1 | 7.4 | 8.1 |
| Shore A | 37.2 | 47.4 | 51.1 | 60 |
| Rebound | 9.6 | 9.2 | 9.3 | 10 |
| **Tear Strength Cure: 25 min @ 170°C; Test: @ 100°C** | | | | |
| Tear Strength, N | 18.8 | 20.6 | 17 | 11.1 |
| Normalized Tear | 1.69 | 1.86 | 1.53 | 1 |
| **Air Diffusion Cure: 25 min @ 170°C; Test: @ 90°C, Gas =Air @ 6 MPa** | | | | |
| Diffusion, $cm^3$/min x $10^8$ | 6.55 | 5.59 | 5.86 | 5.77 |
| Normalized Diffusion | 0.88 | 1.03 | 0.99 | 1 |

As seen in each of Tables 1-3, the combination of the microsilica and carbon black shows significantly improved permeability resistance and tear resistance compared to either the microsilica or carbon black alone, for contant filler volume. Such behavior is unexpected and surprising, suggesting a synergistic effect of the combination of the carbon black and microsilica.

**Claims**

1. A pneumatic tire comprising a carcass and an innerliner, the innerliner comprising a rubber composition, the rubber composition comprising:

    100 parts by weight of at least one elastomer;
    from 10 to 80 parts by weight, per 100 parts by weight of elastomer (phr), of carbon black; and
    from 10 to 70 phr of a silica having a median particle size of less than 500 nm, a specific BET area ranging from 15 to 25 $m^2$/g, and a specific gravity of 2.1 to 2.3 g/$cm^3$.

2. The pneumatic tire of claim 1, wherein the elastomer is selected from the group consisting of butyl rubber, chlorinated butyl rubber, brominated butyl rubber, synthetic polyisoprene, natural rubber, styrene butadiene rubber, polybutadiene, copolymer of isobutylene and paramethylstyrene, and brominated copolymer of isobutylene and paramethylstyrene.

3. The pneumatic tire of claim 1 or 2, wherein the elastomer is selected from the group consisting of butyl rubber, chlorinated butyl rubber, brominated butyl rubber, copolymer of isobutylene and paramethylstyrene, and brominated copolymer of isobutylene and paramethylstyrene.

4. The pneumatic tire of at least one of the previous claims, wherein said silica has a bimodal particle size distribution with a first maximum in range range of from 10 nm to 30 nm, preferably at 20 nm, and a second maximum in a range of from 100 nm to 400 nm, preferably from 150 nm to 300 nm.

5. The pneumatic tire of at least one of the previous claims, wherein said silica is present in the rubber composition in an amount ranging from 10 to 40 phr.

6. The pneumatic tire of at least one of the previous claims, wherein said silica has a median particle size in a range of from 100 to 200 nm.

7. The pneumatic tire of at least one of the previous claims, wherein the total amount of said silica and carbon black in the rubber composition ranges from 10 to 30 percent by volume.

8. The pneumatic tire of at least one of the previous claims, wherein said silica is substantially spherical in shape.

9. The pneumatic tire f at least one of the previous claims, wherein said silica has a surface-area based sphericity of greater than 0.95.

10. The pneumatic tire of at least one of the previous claims, wherein said silica has at least one of the following properties:

   (i) a silicon dioxide content, preferably an amorphous silicon dioxide content, of at least 90.0, alternatively at least 97.0, percent by weight; and/or
   (ii) a carbon content of not more than 1.50 percent by weight; and/or
   (iii) an iron oxide content of not more than 0.25 percent by weight; and/or
   (iv) a copper content of not more than 0.01 percent by weight; and/or
   (v) a manganese content of not more than 0.02 percent by weight: and/or
   (vi) a water content of not more than 0.80 percent by weight.

11. The pneumatic tire of at least one of the previous claims, wherein said silica has at least one of the following properties:

   (i) a median particle size in a range of from 0.12 to 0.18 microns, preferably 0.15 microns; and/or
   (ii) the silica comprises coarse particles having a size of more than 45 microns of not more than 0.1 percent by weight; and/or
   (iii) a pH-value in a range of from 6.5 to 8.0;
   (iv) a specific gravity in a range of from 2.15 to 2.25 g/cm3, preferably 2.2 g/cm3; and/or
   (v) a bulk density in a range of from 500 to 700 kg/m3.

12. The pneumatic tire of at least one of the previous claims, wherein said silica has a loss on ignition at 975°C in a range of from 1.6 to 2.0 %, preferably 1.80%.

13. The pneumatic tire of at least one of the previous claims, wherein said silica is a microsilica or a low structure microsilica.

14. The pneumatic tire of at least one of the previous claims, wherein the innerliner is in direct contact with the carcass.


**Patentansprüche**

1. Luftreifen, umfassend eine Karkasse und eine Innenisolierung, wobei die Innenisolierung eine Kautschukzusammensetzung umfasst, wobei die Kautschukzusammensetzung umfasst:

   100 Gewichtsteile mindestens eines Elastomers;
   10 bis 80 Gewichtsteile, je 100 Gewichtsteile Elastomer (ThK), an Carbon Black; und
   10 bis 70 ThK eines Silikas mit einer mittleren Partikelgröße von weniger als 500 nm, einer spezifischen Oberfläche nach BET im Bereich von 15 bis 25 m$^2$/g und einem spezifischen Gewicht von 2,1 bis 2,3 g/cm$^3$.

2. Luftreifen nach Anspruch 1, wobei das Elastomer aus der aus Butylkautschuk, chloriertem Butylkautschuk, bromiertem Butylkautschuk, synthetischem Polyisopren, Naturkautschuk, Styrol-Butadien-Kautschuk, Polybutadien, Copolymer von Isobutylen und Paramethylstyrol, und bromiertem Copolymer von Isobutylen und Paramethylstyrol bestehenden Gruppe ausgewählt ist.

3. Luftreifen nach Anspruch 1 oder 2, wobei das Elastomer aus der aus Butylkautschuk, chloriertem Butylkautschuk, bromiertem Butylkautschuk, Copolymer von Isobutylen und Paramethylstyrol, und bromiertem Copolymer von Isobutylen und Paramethylstyrol bestehenden Gruppe ausgewählt ist.

**4.** Luftreifen nach mindestens einem der vorgenannten Ansprüche, wobei das Silika eine bimodale Partikelgrößenverteilung mit einem ersten Maximum in einem Bereich von 10 nm bis 30 nm, bevorzugt bei 20 nm, und einem zweiten Maximum in einem Bereich von 100 nm bis 400 nm, bevorzugt von 150 nm bis 300 nm, aufweist.

**5.** Luftreifen nach mindestens einem der vorgenannten Ansprüche, wobei das Silika in der Kautschukzusammensetzung in einer sich auf 10 bis 40 ThK belaufenden Menge vorhanden ist.

**6.** Luftreifen nach mindestens einem der vorgenannten Ansprüche, wobei das Silika eine mittlere Partikelgröße in einem Bereich von 100 bis 200 nm aufweist.

**7.** Luftreifen nach mindestens einem der vorgenannten Ansprüche, wobei sich die Gesamtmenge des Silikas und Carbon Blacks in der Kautschukzusammensetzung auf 10 bis 30 Volumenprozent beläuft.

**8.** Luftreifen nach mindestens einem der vorgenannten Ansprüche, wobei das Silika im Wesentlichen von sphärischer Gestalt ist.

**9.** Luftreifen nach mindestens einem der vorgenannten Ansprüche, wobei das Silika eine oberflächenbasierte Sphärizität von größer als 0,95 hat.

**10.** Luftreifen nach mindestens einem der vorgenannten Ansprüche, wobei das Silika mindestens eine der folgenden Eigenschaften aufweist:

(i) einen Siliziumdioxidgehalt, bevorzugt einen Gehalt an amorphem Siliziumdioxid, von mindestens 90,0, alternativ mindestens 97,0, Gewichtsprozent; und/oder
(ii) einen Kohlenstoffgehalt von nicht mehr als 1,50 Gewichtsprozent; und/oder
(iii) einen Eisenoxidgehalt von nicht mehr als 0,25 Gewichtsprozent; und/oder
(iv) einen Kupfergehalt von nicht mehr als 0,01 Gewichtsprozent; und/oder
(v) einen Mangangehalt von nicht mehr als 0,02 Gewichtsprozent; und/oder
(vi) einen Wassergehalt von nicht mehr als 0,80 Gewichtsprozent.

**11.** Luftreifen nach mindestens einem der vorgenannten Ansprüche, wobei das Silika mindestens eine der folgenden Eigenschaften aufweist:

(i) eine mittlere Partikelgröße in einem Bereich von 0,12 bis 0,18 Mikron, bevorzugt 0,15 Mikron; und/oder
(ii) das Silika umfasst grobe Partikel mit einer Größe von mehr als 45 Mikron von nicht mehr als 0,1 Gewichtsprozent; und/oder
(iii) einen pH-Wert in einem Bereich von 6,5 bis 8,0;
(iv) ein spezifisches Gewicht in einem Bereich von 2,15 bis 2,25 g/cm3, bevorzugt 2,2 g/cm3; und/oder
(v) eine Schüttdichte in einem Bereich von 500 bis 700 kg/m3.

**12.** Luftreifen nach mindestens einem der vorgenannten Ansprüche, wobei das Silika einen Glühverlust bei 975°C in einem Bereich von 1,6 bis 2,0%, bevorzugt 1,80%, aufweist.

**13.** Luftreifen nach mindestens einem der vorgenannten Ansprüche, wobei das Silika ein Mikrosilika oder ein Niederstruktur-Mikrosilika ist.

**14.** Luftreifen nach mindestens einem der vorgenannten Ansprüche, wobei die Innenisolierung in direktem Kontakt mit der Karkasse ist.

**Revendications**

**1.** Bandage pneumatique comprenant une carcasse et un calandrage intérieur, le calandrage intérieur comprenant une composition de caoutchouc, la composition de caoutchouc comprenant :

à concurrence de 100 parties en poids, au moins un élastomère ;
à concurrence de 10 à 80 parties en poids, par 100 parties en poids d'élastomère (phr), du noir de carbone ; et
à concurrence de 10 à 70 phr, de la silice possédant une granulométrie moyenne inférieure à 500 nm, une aire de surface spécifique BET qui se situe dans la plage de 15 à 25 m$^2$/g, et un poids spécifique de 2,1 à 2,3 g/cm$^3$.

2. Bandage pneumatique selon la revendication 1, dans lequel l'élastomère est choisi parmi le groupe constitué par du caoutchouc butyle, du caoutchouc chlorobutyle, du caoutchouc bromobutyle, du polyisoprène synthétique, du caoutchouc naturel, du caoutchouc de styrène-butadiène, du polybutadiène, un copolymère d'isobutylène et de paraméthylstyrène, et un copolymère bromé d'isobutylène et de paraméthylstyrène.

3. Bandage pneumatique selon la revendication 1 et 2, dans lequel l'élastomère est choisi parmi le groupe constitué par du caoutchouc butyle, du caoutchouc chlorobutyle, du caoutchouc bromobutyle, un copolymère d'isobutylène et de paraméthylstyrène, et un copolymère bromé d'isobutylène et de paraméthylstyrène.

4. Bandage pneumatique selon au moins une des revendications précédentes, dans lequel ladite silice possède une distribution granulométrique bimodale avec un premier maximum dans la plage de 10 nm à 30 nm, de préférence de 20 nm et un deuxième maximum dans la plage de 100 nm à 400 nm de préférence 250 nm à 300 nm.

5. Bandage pneumatique selon au moins une des revendications précédentes, dans lequel ladite silice est présente dans la composition de caoutchouc en une quantité qui se situe dans la plage de 10 à 40 phr.

6. Bandage pneumatique selon au moins une des revendications précédentes, dans lequel ladite silice possède une granulométrie moyenne dans la plage de 100 à 200 nm.

7. Bandage pneumatique selon au moins une des revendications précédentes, dans lequel la quantité totale de ladite silice et dudit noir de carbone dans la composition du caoutchouc se situe dans la plage de 10 à 30 % en volume.

8. Bandage pneumatique selon au moins une des revendications précédentes, dans lequel ladite silice possède une configuration essentiellement sphérique.

9. Bandage pneumatique selon au moins une des revendications précédentes, dans lequel ladite silice possède une sphéricité basée sur l'aire de surface, supérieure à 0,95.

10. Bandage pneumatique selon au moins une des revendications précédentes, dans lequel ladite silice possède au moins une des propriétés suivantes :

    (i) une teneur en dioxyde de silicium, de préférence une teneur en dioxyde de silicium amorphe d'au moins 90,0, en variante d'au moins 97,0 % en poids ; et/ou
    (ii) une teneur en carbone qui n'est pas supérieure à 1,50 % en poids ; et/ou
    (iii) une teneur en oxyde de fer qui n'est pas supérieure à 0,25 % en poids ; et/ou
    (iv) une teneur en cuivre qui n'est pas supérieure à 0,01 % en poids ; et/ou
    (v) une teneur en manganèse qui n'est pas supérieure à 0,02 % en poids ; et/ou
    (vi) une teneur en eau qui n'est pas supérieure à 0,80 % en poids.

11. Bandage pneumatique selon au moins une des revendications précédentes, dans lequel ladite silice possède au moins une des propriétés suivantes :

    (i) une granulométrie moyenne dans la plage de 0,12 à 0,18 micron, de préférence de 0,15 micron ; et/ou
    (ii) une teneur en particules grossières dont la dimension est supérieure à 45 microns, qui n'est pas supérieure à 0,1 % en poids ; et/ou
    (iii) une valeur de pH dans la plage de 6,5 à 8,0 ;
    (iv) un poids spécifique dans la plage de 2,15 à 2,25 g/cm$^3$, de préférence de 2,2 g/cm$^3$ ; et/ou
    (v) une densité apparente dans la plage de 500 à 700 kg/m$^3$.

12. Bandage pneumatique selon au moins une des revendications précédentes, dans lequel ladite silice possède une perte au feu à 975 °C dans la plage de 1,6 à 2,0 %, de préférence de 1,80 %.

13. Bandage pneumatique selon au moins une des revendications précédentes, dans lequel ladite silice est une microsilice ou une microsilice de faible structure.

14. Bandage pneumatique selon au moins une des revendications précédentes, dans lequel le calandrage intérieur est mis en contact direct avec la carcasse.

**EP 2 072 284 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3808177 A
- JP 2006241297 A
- US 6696035 A
- US 5915150 A